# EUROPÄISCHE PATENTSCHRIFT

(11) **EP 2 669 632 B1**
(45) Veröffentlichungstag und Bekanntmachung des Hinweises auf die Patenterteilung: **15.05.2019**
(21) Anmeldenummer: 12195836.7
(22) Anmeldetag: 06.12.2012
(51) Int. Cl.: G01C 21/34

(54) **Verfahren zum Berechnen einer Route und Navigationsgerät**
Method for calculating a route and navigation device
Procédé de calcul d'une route et appareil de navigation

(30) Priorität: 31.05.2012 EP 12004202
(43) Veröffentlichungstag der Anmeldung: 04.12.2013
(73) Patentinhaber: Volkswagen Aktiengesellschaft, 38440 Wolfsburg (DE)
(72) Erfinder: Hoch, Nicklas, 30559 Hannover (DE); Zemmer, Kevin, 38446 Wolfsburg (DE)

(56) Entgegenhaltungen:
- US-A1- 2011 184 642

## Beschreibung

### Technisches Gebiet

Verschiedene Ausführungsformen betreffen ein Verfahren zum Berechnen einer Route und ein Navigationsgerät. Insbesondere betreffen verschiedene Ausführungsformen Techniken, welche das Berechnen einer Route unter Berücksichtigung von Geschwindigkeitsprofilen entlang der Route ermöglichen.

### Hintergrund

Navigation von Fahrzeugen erfolgt mittels Routen-Berechnung in Navigationssystemen. Hierbei wird einerseits eine immer genauere Berechnung der optimalen Route angestrebt, als auch eine Optimierung der Route hinsichtlich weiterer oder mehreren Kriterien gleichzeitig, etwa Fahrtdauer, Fahrtstreckenlänge und / oder Energieverbrauch. Insbesondere für Elektrofahrzeuge mit vergleichsweise begrenzten Ressourcen ist es erstrebenswert, den Energieverbrauch möglichst genau bei der Berechnung der Route zu berücksichtigen - gegebenenfalls unter weiterer Berücksichtigung der Fahrtdauer.

Zur Routen-Berechnung sind zweidimensionale (2D) Graphen verfügbar, die aus Kanten und Knoten bestehen, und ein Straßennetz abbilden. Assoziiert mit den Kanten und/oder den Knoten sind Fahrtgeschwindigkeiten, welche typischerweise eine Durchschnitts- oder Maximalge-schwindigkeit auf den jeweiligen Kanten und/oder Knoten des Graphens indizieren. Da insbe-sondere die Fahrzeit und der Energieverbrauch mit den Geschwindigkeiten korrelieren, kann es erstrebenswert sein, diese mit den Kanten und/oder Knoten des Graphens assoziierten Fahrt-geschwindigkeiten bei dem Berechnen der Route zu berücksichtigen. Darüber hinaus können weitere Attribute mit den Knoten und / oder Kanten des 2D Graphens assoziiert sein, etwa eine Höhe oder ein Höhenunterschied usf. Solche weiteren Attribute können auch bei dem Berech-nen der Route berücksichtigt werden.

Jedoch kann es vergleichsweise schwierig möglich sein oder nur eingeschränkt möglich sein, kontinuierliche Geschwindigkeitsübergänge zwischen angrenzenden Kanten und/oder Knoten des Graphens mit jeweils unterschiedlichen assoziierten Fahrtgeschwindigkeiten bei dem Berechnen der Route zu berücksichtigen. Münden nämlich z.B. zwei Kanten mit jeweils unterschiedlichen assoziierten Fahrtgeschwindigkeiten in eine weitere Kante ein, so kann das Geschwindigkeitsprofil in der weiteren Kante abhängig davon sein, welche der Eingangs-Kanten (d.h. der Kanten, die in die weitere Kante einmünden) zuvor befahren wurde. Dies wird nachfolgend an einem einfachen Beispiel illustriert: Angenommen, eine erste Eingangs-Kante mit einer maximalen Fahrtgeschwindigkeit von 50 km/h und eine zweite Eingangs-Kante mit einer maximalen Fahrtgeschwindigkeit von 30 km/h münden in die weitere Kante, welche eine assoziierte Fahrtgeschwindigkeit von 80 km/h aufweist. In einem solchen Fall verlängert sich der Weg bzw. die Zeitdauer zum Erreichen der maximalen Fahrtgeschwindigkeit von 80 km/h auf der weiteren Kante für den Fall, dass zum Erreichen der weiteren Kante die zweite Eingangs-Kante mit der geringeren assoziierten Fahrtgeschwindigkeit gewählt wurde - im Gegensatz zu dem Fall, in dem die erste Eingangs-Kante mit der größeren assoziierten Fahrtgeschwindigkeit von 50 km/h gewählt wurde.

In anderen Worten und abstrakt formuliert kann bei dem Berücksichtigen von Geschwindigkeitsprofilen eine Situation entstehen, bei der die Gewichte, d.h. die zur Routen-Berechnung berücksichtigten Werte, welche eine Fahrtdauer und/oder einen Energieverbrauch abbilden, wegabhängig sind. Eine effiziente Routenberechnung mit vergleichsweise geringen Rechnerressourcen ist typischerweise für einen Graphen mit wegabhängigen Gewichten nicht oder nur eingeschränkt möglich. Dies kann der Fall sein, weil bestimmte Algorithmen zur Routen-Berechnung nur mit wegunabhängigen Gewichten ausgeführt werden.

Die US 2011/184 642 A1 offenbart das Abfragen von Daten aus einer Kartendatenbank für eine spezifische Route, die simuliert werden soll. Diese Abfrage erhält die relevanten Verbindungsgeometriedaten und zugehörige Attribute für diese Route. Die individuellen Verbindungen, Formpunkte und Knoten sind angeordnet, um einen durchgängigen virtuellen Abschnitt einer Autobahn auszubilden. Das Ergebnis dieser Abfrage und Anordnung ist eine Routendatei, die verschiedene Attribute beinhalten kann. Der Dijkstra-Algorithmus ist ein Beispiel eines Ansatzes, der dazu verwendet werden kann, um die auszuwertenden Routen zu selektieren und um die beste Route von einem Standpunkt des Energieverbrauchs auszuwählen. Der Energie- oder Treibstoffverbrauch wird mittels einer Simulation berechnet. Der Treibstoff oder die Energie, die benötigt wird, um das Fahrzeug bei einer konstanten Geschwindigkeit entlang einer Verbindung zu bewegen, kann durch Multiplikation der Länge einer Verbindung mit einem fahrzeugspezifischen Gewichtungsfaktor erhalten werden.

Deshalb besteht ein Bedarf für verbesserte Techniken zum Berechnen einer Route und zur Berücksichtigung von Geschwindigkeitsprofilen. Insbesondere besteht ein Bedarf für solche Techniken, welche eine genaue und Ressourcen-effiziente Berechnung ermöglichen.

### Zusammenfassung

Diese Aufgabe wird von den Merkmalen der unabhängigen Ansprüche gelöst. Die abhängigen Ansprüche definieren Ausführungsformen.

Laut der Erfindung indiziert die Fahrtgeschwindigkeit jeder Eingangs-Kante und die Fahrtgeschwindigkeit jeder Ausgangs-Kante eine Geschwindigkeitsänderung. Das Geschwindigkeitsprofil berücksichtigt die Fahrtgeschwindigkeit der zugehörigen Eingangs-Kante und der zugehörigen Ausgangs-Kante und die zugehörige Geschwindigkeitsänderung. Die Fahrtgeschwindigkeiten können eine maximale Geschwindigkeit und / oder eine Durchschnittsgeschwindigkeit und / oder eine typische Geschwindigkeitsvariation bzw. Geschwindigkeitsstreuung bezeichnen. Entsprechend kann sich die Geschwindigkeitsänderung aus einer endlichen Differenz der Fahrtgeschwindigkeiten ergeben und z.B. einen kontinuierlichen bzw. stetigen Verlauf der zur Berechnung der Route berücksichtigten Geschwindigkeit bezeichnen.

Die Gewichte können z.B. zusätzlich auch aus weiteren Parametern bestimmt werden. Dem Fachmann sind hier verschiedene Parameter bekannt, welche für die Routenberechnung relevant sein können.

Z.B. kann der Initial-Graph aus einer Kartendatenbank erhalten werden und das Straßennetz definieren. Z.B. können die verschiedenen Kanten Straßenabschnitten entsprechen und die Knoten die verschiedenen Straßenabschnitte verbinden. Insbesondere können die Kanten der Graphen eine Fahrtrichtung aufweisen, etwa bei Einbahnstraßen oder Autobahnen mit Fahrtrichtung; es ist auch möglich, dass alle oder bestimmte Kanten der Graphen in beide Richtungen zu befahren sind.

Laut den Ausführungsformen sind Eingangs-Kanten eines bestimmten Knotens diejenigen Kanten, die zu dem bestimmten Knoten hinführen, z.B. unter Berücksichtigung der Fahrtrichtung. Laut den Ausführungsformen sind Ausgangs-Kanten eines bestimmten Knotens diejenigen Kanten, die von dem bestimmten Knoten wegführen, z.B. unter Berücksichtigung der Fahrtrichtung.

Es ist möglich, dass das Verfahren weiterhin umfasst: Übernehmen aller Knoten und Kanten des Initial-Graphens in den Ergebnis-Graphen, die zu keinem Kreuzungspunkt mit einer Verzweigung von Pfaden gehören.

Es ist möglich, dass das Verfahren weiterhin umfasst, dass die Gewichte für die aus dem Initial-Graphen übernommenen Kanten den Gewichten der entsprechenden Kanten im Initial-Graphen entsprechen.

Bevorzugt an Punkten im Initial-Graphen, an denen die Geschwindigkeitsänderungen vorliegen, kann es zu einer Wegabhängigkeit der Gewichte kommen. Dies ist der Fall, da die Geschwindigkeitsänderung eine notwendige Voraussetzung für die Wegabhängigkeit der Gewichte sein kann.

Jedoch kann es für Punkte im Initial-Graphen, an denen eine Geschwindigkeitsänderung vorliegt, jedoch z.B. keine Verzweigung der Wege vorliegt - also z.B. eine Geschwindigkeitsänderung auf gerader, freier Strecke ohne Kreuzung - trotz der Geschwindigkeitsänderung zu keiner Wegabhängigkeit der Gewichte kommen. Diese Geschwindigkeitsänderung muss also nicht notwendigerweise eine hinreichende Bedingung für die Wegabhängigkeit der Gewichte sein.

Laut der Erfindung ist der mindestens eine bestimmte Knoten ein Kreuzungspunkt mit einer Verzweigung von Pfaden, wodurch die Gewichte der angrenzenden Kanten wegabhängig sind.

In anderen Worten ist laut Erfindung der bestimmte Knoten mit mindestens drei Kanten verbunden. Dies kann typisch für Kreuzungspunkte sein, bei denen die Wahl verschiedener Eingangs-Kanten und / oder Ausgangs-Kanten besteht.

Durch das Transformieren durch Hinzufügen der hinzugefügten Kanten für den mindestens einen bestimmten Knoten kann, in anderen Worten, lokal die Kardinalität des Ergebnis-Graphens an Kreuzungspunkten mit Geschwindigkeitsänderung verändert werden (z.B. um Eins). Durch das Transformieren ist es möglich wegabhängige Gewichte des Initial-Graphs den hinzugefügten Kanten zuzuweisen. Dadurch kann erreicht werden, dass der Ergebnis-Graph wegunabhängige Gewichte aufweist.

In anderen Worten kann ein zusätzlicher Freiheitsgrad bei dem Zuweisen der Gewichte zu den hinzugefügten Kanten dazu dienen, die Gewichte wegunabhängig zu erhalten. Es kann aber nicht notwendig sein, dass der Freiheitsgrad bzw. die Kardinalität erhöht wird, z.B. wenn der Ge-samt-Graph betrachtet wird.

Anschaulich gesprochen kann eine Abbiege-Beziehung (also. z.B. Abbiegen in eine Straße, Ab/Auffahren von/zu einer Autobahn usf.), welche eine Geschwindigkeitsänderung benötigt, durch hinzugefügte Kanten des Ergebnis-Graphens bei dem Berechnen der Route berücksichtigt werden. Diese hinzugefügten Kanten können dann alle bzw. Teile der mit der wegabhängigen Geschwindigkeitsänderung assoziierten Gewichte tragen.

Laut Erfindung werden die Gewichte für die hinzugefügten Kanten derart bestimmt, dass diese wegabhängige Anteile der Geschwindigkeitsänderungen berücksichtigen.

Somit werden die wegabhängigen Anteile der Geschwindigkeitsänderung in Bezug auf die Gewichte den hinzugefügten Kanten zugeordnet.

Für das Berechnen der Route können herkömmliche Routen-Berechnungsalgorithmen verwendet werden, etwa der Dijkstra-Algorithmus oder abgeleitete Algorithmen, oder der Bellman-Ford-Algorithmus oder abgeleitete Algorithmen. Entsprechende Techniken sind dem Fachmann bekannt, so dass hier keine weiteren Details erläutert werden müssen.

Die Routen-Berechnungsalgorithmen können z.B. die Summe der Gewichte entlang der Route minimieren oder maximieren.

Das Verwenden von herkömmlichen Routen-Berechnungsalgorithmen, etwa wie die oben genannten, kann den Vorteil aufweisen, dass eine besonders effiziente Berechnung der Route möglich ist. Insbesondere können die genannten Algorithmen bezüglich ihres Bedarfs von Rechenkapazitäten derart optimiert sein, dass eine schnelle und effiziente Berechnung möglich ist. Insbesondere kann es möglich sein, solche genannten Routen-Berechnungsalgorithmen zu verwenden, weil der Ergebnis-Graph wegunabhängige Gewichte aufweisen kann.

Die Gewichte selbst können aus den Geschwindigkeitsprofilen mittels grundsätzlich bekannter Techniken berechnet werden. z.B. sind dem Fachmann entsprechende fundamentale Abhängigkeiten der Fahrtzeit von der Geschwindigkeit und Strecke (z.B. Zeit = Strecke/Geschwindigkeit) bekannt. Entsprechend können, etwa unter Berücksichtigung des Fahrzeugmodells, der Energieverbrauch aus dem Geschwindigkeitsprofil abgeleitet werden. Dies kann auch mittels z.B. empirisch bestimmter Zuordnungen oder parametrisierter Abhängigkeiten geschehen Darüber hinaus kann z.B. ein Fahrermodell berücksichtigt werden. Darüber hinaus können weitere Attribute, wie beispielsweise die Höhe, einbezogen werden.

Die Gewichte können den Kanten richtungsabhängig zugewiesen werden. Dies bedeutet, dass Z.B. die Gewichte für das Durchfahren der Kante von begrenzenden Knoten A zu Knoten B anders sein können als die Gewichte für das Durchfahren derselben Kante von Knoten B zu Konten A.

Nachfolgend werden verschiedene Varianten beschrieben, wie es insbesondere möglich ist, die hinzugefügte Kante zu bestimmen und derart die Transformation durchzuführen. Es sollte verstanden werden, dass insbesondere die im Ergebnis-Graphen hinzugefügte Kante maßgeblich sein kann und weniger die konkrete Transformation.

Das Verfahren umfasst weiterhin das Teilen der Eingangs-Kanten und der Ausgangs-Kanten des mindestens einen bestimmten Knotens in jeweils zwei Kanten, die jeweils durch einen Teilungs-Knoten verbunden sind, wobei die jeweils hinzugefügte Kante zwischen den beiden Teilungs-Knoten der jeweiligen geteilten Eingangs-Kante und der geteilten Ausgangs-Kante verläuft.

In anderen Worten wird die Eingangs-Kante zweigeteilt und die Ausgangs-Kante zweigeteilt, und jeweils der Teil der geteilten Eingangs- und Ausgangs-Kante, der dem bestimmten Knoten zugewendet ist (bzw. an diesen angrenzt), wird verworfen. Die Teilungs-Knoten werden dann mit der hinzugefügten Kante verbunden. Dadurch wird lokal die Kardinalität des Ergebnis-Graphen um Zwei erhöht. Zum Beispiel kann sich die Kardinalität der Menge von Kanten des Ergebnis-Graphens um Eins erhöhen und die Kardinalität der Menge von Knoten um Eins erhöhen, sodass sich die Kardinalität des Ergebnis-Graphens insgesamt um Zwei erhöht. Der hinzugefügten Kante kön-nen dann die wegabhängigen Gewichte aufgrund der Geschwindigkeitsprofile zugewiesen wer-den. Insbesondere kann in dem hier diskutierten Beispiel die hinzugefügte Kante einer Abbie-gebeziehung zwischen der Eingangs-Kante und der Ausgangs-Kante entsprechen, also z.B. dem Linksabbiegen oder dem Geradeausfahren an einer Kreuzung etc. entsprechen.

Z.B. kann das Teilen der Eingangs-Kanten und Ausgangs-Kanten an einer vorbestimmten Stelle entlang deren Länge geschehen.

Es wäre z.B. möglich, dass das Teilen jeweils an der Hälfte der entsprechenden Eingangs-Kante und der entsprechenden Ausgangs-Kante erfolgt. Andere vorbestimmte Stellen sind aber möglich. Insbesondere wäre es möglich, dass die vorbestimmte Stelle für jede oder bestimmte Eingangs-Kanten und / oder Ausgangs-Kanten bestimmt werden, z.B. basierend auf einem Fahrzeugmodell oder Fahrermodell oder Beträgen der Differenzen der beteiligten Fahrtgeschwindigkeiten der Eingangs-Kante und / oder Ausgangs-Kante und / oder des Knotens.

In einer besonders einfachen Variante kann das Transformieren beinhalten: Erzeugen des Ergebnis-Graphens als geometrisch dualer Graph des Initial-Graphens, sodass den Kanten des Initial-Graphens Knoten des Ergebnis-Graphens entsprechen und / oder den Knoten des Initial-Graphens Kanten des Ergebnis-Graphens entsprechen.

Das Transformieren kann weiterhin das Löschen bzw. Hinzufügen von Kanten des Ergebnis-Graphens als geometrisch dualer Graph des Initial-Graphens, welche Abbiege-Beschränkungen unterliegen, beinhalten.

Voranstehend wurden Techniken erläutert, welche das Transformieren des Initial-Graphens in den Ergebnis-Graphen ermöglichen. Nachfolgend werden vorrangig weitere Details zu den Geschwindigkeitsprofilen erläutert.

Es ist z.B. möglich, dass die Geschwindigkeitsprofile basierend auf einem Fahrermodell und / oder einem Fahrzeugmodell berechnet werden, welches Beschleunigung und Verzögerung des Fahrzeugs berücksichtigt.

Zum Beispiel kann der Energieverbrauch von elektrischen Fahrzeugen von Fahrzeugeigenschaften bzw. dem Fahrzeugmodell abhängen, welches z.B. Antriebsstrang-Charakteristika, Infrastruktureigenschaften wie Straßenneigung, und Fahrerverhalten, etwa Beschleunigungs- und Bremsverhalten, berücksichtigt. Die meisten elektrischen Fahrzeuge können zwei Betriebsarten unterstützen: erstens, Energieverbrauch: Transformation von elektrischer Batterieenergie in sowohl kinetische als auch potenzielle Energie; und zweitens: Energierekuperation: umgekehrte Transformation von kinetischer und potenzieller Energie in elektrische Batterieenergie. Wechsel zwischen den zwei Betriebsarten können beinahe instantan passieren, so dass in der Regel auch kurze Reisen aus verschiedenen Sequenzen eines jeden Betriebsmodus bestehen. Der Fahrzeugverbrauch kann sich hoch nichtlinear in Bezug auf Reiseentfernung und Zeit verhalten.

Die Verbrauchsberechnung kann deshalb in zwei Ansätze unterteilt werden: erstens, ein Fahrermodell. Bezüglich des Fahrermodells kann angenommen werden, dass der Fahrer die Umgebung, etwa Straßenschilder und Verkehrssituation, erfasst. Basierend hierauf fordert der Fahrer eine Änderung im Fahrzeugzustand an, etwa eine Beschleunigung oder ein Abbremsen.

Zweitens, ein Fahrzeugmodell: Der Übergang von einem derzeitigen Fahrzeugzustand in einen angestrebten Fahrzeugzustand benötigt Energie: mechanische Antriebsstrangleistung wird benötigt, um eine angemessene Menge von Drehmoment auf die angetriebenen Räder zu übertragen, so dass externe Fahrzeugkräfte überwunden werden können. Eine erste elektrische Batterieleistung wird benötigt, um die mechanische Antriebsstrangleistung bereitzustellen. Die erste elektrische Batterieleistung wird beispielsweise als ein Ergebnis des komplexen Wechselspiels von der zur Verfügung stehenden elektrischen Gesamtbatterieleistung, einer zweiten elektrischen Leistung von weiteren fahrzeuginternen Komponenten und der verbleibenden Batterieenergie berechnet.

Bezüglich des Fahrermodells kann z.B. angenommen werden, dass der Fahrer mit einer konstanten Geschwindigkeit fährt, außer für den Fall, dass Geschwindigkeitsänderungen notwendig werden. Letzteres kann z.B. der Fall sein, wenn Straßensegmente mit unterschiedlichen Fahrtgeschwindigkeiten bzw. Geschwindigkeitsbegrenzungen durchfahren werden. Zwischen diesen Segmenten wird der Fahrer entweder beschleunigen oder abbremsen, um die neue Zielgeschwindigkeit zu erreichen. Um Geschwindigkeitsbegrenzungen zu berücksichtigen, kann bezüglich des Fahrermodells z.B. angenommen werden, dass sowohl Beschleunigung, als auch Abbremsphasen auf dem Straßensegment mit höherer Zielgeschwindigkeit stattfinden. Wenn diese Zielgeschwindigkeit größer ist als die gegenwärtige Geschwindigkeit, wird der Fahrer zu Beginn des nächsten Straßensegments mit der Beschleunigung beginnen. Wenn jedoch die Zielgeschwindigkeit geringer als die gegenwärtige Geschwindigkeit ist, wird der Fahrer die Zielgeschwindigkeit bereits an dem Ende des gegenwärtigen Straßensegments erreichen.

Solche Beschleunigungsphasen und/oder Abbremsphasen können z.B. durch polynomiale Funktion als Funktion der Zeit oder des Ortes beschrieben werden. Entsprechende Techniken sind dem Fachmann bekannt, so dass hier keine weiteren Details erläutert werden müssen. Das Fahrzeugmodell und/oder das Fahrzeugverbrauchsmodell kann z.B. aus drei Abschnitten bestehen: dem Fahrzeugwiderstandsmodell, dem Antriebsstrang- und Hilfsverbraucher-Modell. Bezüglich des Fahrzeugwiderstandsmodells kann das Ziel sein, für jede Antriebsachse das Drehmoment zu berechnen, welches notwendig ist, um dem Geschwindigkeitsprofil zu folgen, welches von dem Fahrer des Fahrzeugs angefordert ist. Bezüglich des Antriebsstrang-modells kann z.B. die mechanische Motorleistung für das Räderdrehmoment und die Geschwindigkeit des Fahrzeugs bestimmt werden sowie die dafür benötigte elektrische Leistung bzw. Menge eines fossilen Energieträgern. Bezüglich des Hilfsverbrauchermodells kann die Leistung für Nebenverbraucher bestimmt werden, welche nicht direkt auf den Antriebsstrang wirken.

Bezüglich des Batteriemodells kann die Fahrzeugbatterie Leistungsanforderung der Fahrzeugkomponenten, insbesondere des Antriebsstrangs und der Hilfsverbraucher, berücksichtigen. Die Änderung im Ladezustand der Batterie kann von der entnommenen Komponentenleistung, der Ladeleistung und / oder der effektiven Verlustleistung abhängigen. Letztere selbst kann vom Ladezustand der Fahrzeugbatterie abhängen. Entsprechende Techniken sind dem Fachmann bekannt, so dass hier keine weiteren Details zum Fahrermodell und/oder zum Fahrzeugmodell erläutert werden müssen.

Es ist laut einer Ausführungsform möglich, dass die Geschwindigkeitsprofile eine stetige Geschwindigkeitsänderung zwischen den mit den Kanten des Ergebnis-Graphens assoziierten Fahrtgeschwindigkeiten unter Berücksichtigung des Fahrermodells und / oder des Fahrzeugmodells beschreiben.

Eine stetige Geschwindigkeitsänderung kann eine besonders realistische und genaue Bestimmung der Gewichte und Berechnung der Route ermöglichen. Stetig kann bedeuten: ohne Sprünge und / oder kontinuierlich.

Die Geschwindigkeitsprofile können aus einer Beschleunigungs-Phase mit zunehmender Fahrtgeschwindigkeit und / oder einer Abbrems-Phase mit abnehmender Fahrtgeschwindigkeit bestehen, sowie aus einer Konstant-Phase mit gleichbleibender Fahrtgeschwindigkeit bestehen.

Zum Beispiel können sich die Längen der Abbrems-Beschleunigungs- und/oder Konstant-Fahrten aus dem Fahrzeug und/oder Fahrer-Modell und den Fahrtgeschwindigkeiten, die mit den Knoten und / oder Kanten des Ergebnis-Graphens bzw. Initial-Graphen assoziiert sind, ergeben. Tendiert z.B. ein Fahrer zu einer vergleichsweise sportlichen Fahrweise, so kann die Beschleunigungs- und/oder Abbrems-Phase eine vergleichsweise geringe örtliche Ausdehnung aufweisen. Darüber hinaus kann je nach Motorleistung des Fahrzeugs, die in dem FahrzeugModell berücksichtigt wird, die Beschleunigungsphase längere oder kürzere örtliche Ausdehnungen aufweisen (jew. bei gleichen Fahrtgeschwindigkeiten). Weitere Abhängigkeiten sind möglich und die voran genannten Szenarien sind rein illustrativ und nicht beschränkend.

Voranstehend wurde erläutert, dass die Gewichte für die hinzugefügten Kanten derart bestimmt werden, dass der wegabhängige Anteil der Geschwindigkeitsänderung von diesen berücksichtigt wird.

Insbesondere kann es diesbezüglich vorteilhaft sein, dass die vorbestimmte Stellen, an der die Eingangs-Kante und die Ausgangs-Kante entlang deren Länge geteilt werden, in der Konstant-Phase liegen.

Z.B. kann die vorbestimmte Stelle entsprechend bestimmt werden. Es wäre in einem besonders einfachen Szenario aber auch möglich, dass die vorbestimmte Stelle voreingestellt so liegt, dass ein solches Kriterium bestmöglich erfüllt wird.

Es sollte jedoch verstanden werden, dass es auch möglich ist, die verschiedensten hier beschriebenen Techniken dann anzuwenden, wenn die vorbestimmte Stelle in der Beschleunigungs- oder Abbrems-Phase liegt.

Es ist möglich, dass die Geschwindigkeitsprofile Fahrtgeschwindigkeiten beschreiben, die immer kleiner oder gleich der entsprechenden Fahrtgeschwindigkeit der Kanten und / oder Knoten des Ergebnis-Graphens sind.

Eine solche Randbedingung kann insbesondere in Bezug auf das Fahrer-Modell berücksichtigt werden; z.B. kann das Fahrer-Modell derart ausgestaltet sein, dass Geschwindigkeitsänderungen immer in demjenigen von zwei angrenzenden Straßenelementen stattfinden, welches die größere assoziierte Fahrtgeschwindigkeit aufweist.

Für ein Navigationsgerät entsprechend der Erfindung können Effekte erzielt werden, welche vergleichbar sind mit den Effekten, die für das Verfahren zum Berechnen der Route unter Berücksichtigung von Geschwindigkeitsprofilen gemäß einem weiteren Aspekt der vorliegenden Erfindung erhalten werden können.

Die oben dargelegten Merkmale und Merkmale, die nachfolgend beschrieben werden, können nicht nur in den entsprechenden explizit dargelegten Kombinationen verwendet werden, sondern auch in weiteren Kombinationen oder isoliert ohne den Schutzumfang der vorliegenden Er-findung zu verlassen.

### Kurzbeschreibung der Figuren

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
FIG. 1 einen Initial-Graphen, der ein Straßennetz abbildet, an einem Kreuzungspunkt illustriert;
FIG. 2 einen Zwischenschritt einer Transformation des Initial-Graphens der FIG. 1 in einen Ergebnis-Graphen illustriert;
FIG. 3 den Ergebnis-Graphen illustriert, der aus der Transformation des Initial-Graphens der FIGs. 1 und 2 erhalten wird;
FIG. 4 ein Geschwindigkeitsprofil mit Beschleunigungs-, Abbrems- und Konstant-Phase in Bezug auf den Initial-Graphen und den Ergebnis-Graphen illustriert;
FIG. 5 für den Ergebnis-Graphen bestimmte Gewichte für ein Geschwindigkeitsprofil illustriert;
FIG. 6 ein Flussdiagramm eines Verfahrens zum Berechen einer Route ist;
FIG. 7 ein Flussdiagramm ist, welches weitere Details zu dem Flussdiagramm der FIG. 6 illustriert; und
FIG. 8 eine schematische Ansicht eines Navigationsgeräts gemäß verschiedener Ausführungsformen ist.

### Detaillierte Beschreibung

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente.

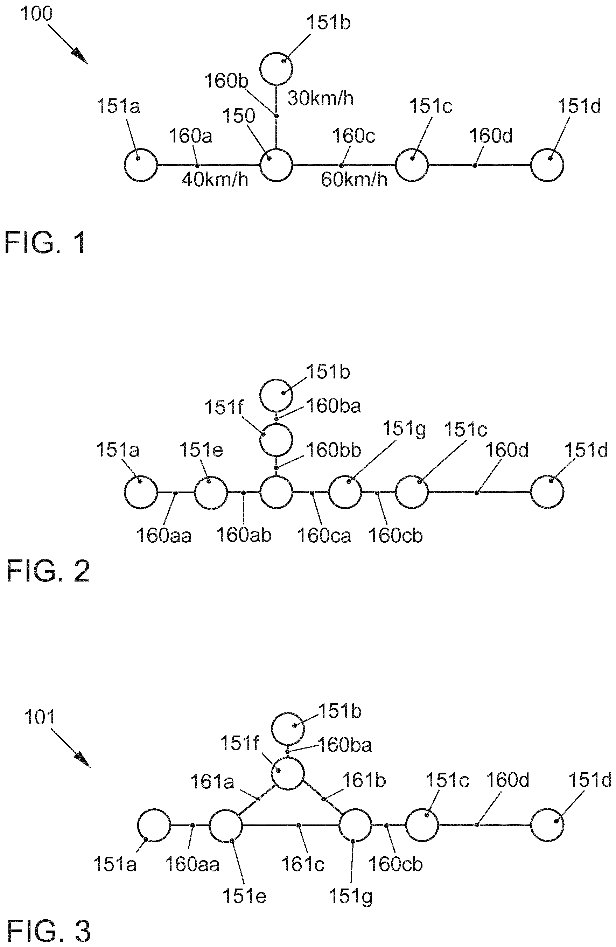

In FIG. 1 ist ein Kreuzungsknoten 150 des Initial-Graphens 100 dargestellt. Der Kreuzungs-Knoten 150 weist über die Kante 160a eine Verbindung mit dem Knoten 151a und über die Kante 160c eine Verbindung mit dem Knoten 151c auf. Der Kreuzungs-Knoten 150 weist weiterhin über die Kante 160b eine Verbindung mit dem Knoten 151b auf. Weiterhin ist der Knoten 151c über die Kante 160d mit dem Knoten 151d verbunden. Wie aus FIG. 1 ersichtlich, ist der Kante 160a eine Fahrtgeschwindigkeit von 40 km/h zugeordnet, der Kante 160b eine Fahrtge-schwindigkeit von 30 km/h und der Kante 160c eine Fahrtgeschwindigkeit von 60 km/h.

Aus diesem Beispiel ist ersichtlich, dass z.B. ein Geschwindigkeitsprofil für einen Weg der entlang der Kanten 160a, 160c führt, unterschiedlich zu einem Geschwindigkeitsprofil für einen Weg ist, der entlang der Kanten 160b, 160c führt. Zum Beispiel kann es in letzterem Fall notwendig sein, entlang der Kante 160c eine größere Differenz von Geschwindigkeiten (vorliegend 30 km/h) zu überwinden - im Vergleich zu dem ersten Fall, bei dem eine geringere Differenz von Geschwindigkeiten (vorliegend 20 km/h) überwunden werden muss. Deshalb kann z.B. eine Beschleunigungsphase entlang der Kante 160c für einen Weg, der entlang der Kanten 160b, 160c führt, länger sein, im Vergleich zu dem Fall, dass der Weg entlang der Kanten 160a, 160c führt. In anderen Worten: Die Gewichte für die Kante 160c, welche diese Geschwindigkeitsprofile berücksichtigen, sind wegabhängig.

In FIG. 1 sind wegabhängige Gewichte in Bezug auf den speziellen Kreuzung-Knoten 150 dargestellt. Entsprechende wegabhängige Gewichte lassen sich für eine Vielzahl verschiedener Knoten bzw. Kanten realisieren. Deshalb ist FIG. 1 lediglich beispielhaft zu verstehen.

Die Kante 160a des Initial-Graphen 100 kann auch als Eingangs-Kante des Kreuzungs-Knotens 150 bezeichnet werden, da Wege über diese Kante 160a zu dem Kreuzungs-Knoten 150 hinführen. Dementsprechend kann die Kante 160c als Ausgangs-Kante des Kreuzungs-Knotens 150 des Initial-Graphens 100 bezeichnet werden, da Wege von dem Kreuzungs-Knoten 150 über die Kante 160c wegführen.

Gleichermaßen kann die Kante 160b als Eingangs-Kante des Kreuzungs-Knotens 150 bezeichnet werden. Für den Fall, dass die Kanten 160a, 160b, 160c in beiden Richtungen befahrbar sind, stellen jede der Kanten auch entsprechend Eingangs- bzw. Ausgangs-Kanten dar. Nachfolgend wird der Einfachheit halber auf die Kanten 160a, 160b als die Eingangs-Kanten des Kreuzungs-Knotens 150 Bezug genommen, während auf die Kante 160c des Initial-Graphens 100 als die Ausgangs-Kante des Kreuzungs-Knotens 150 Bezug genommen wird.

In Bezug auf die FIGs. 2, 3 werden nachfolgend Techniken erläutert, welche das Transformieren des Initial-Graphens 100 in einen Ergebnis-Graphen 101 ermöglichen, wobei der Ergebnis-Graph 101 wegunabhängige Gewichte aufweist.

Aus FIG. 2 ist ersichtlich, dass im Rahmen des Transformierens des Initial-Graphens 100 in den Ergebnis-Graphen 101 den Eingangs- und Ausgangs-Kanten 160a, 160b, 160c jeweils Teilungs-Knoten 151e, 151f, 151g hinzugefügt wurden. Dadurch wird die Kante 160a des Initial-Graphens in zwei Kanten 160aa, 160ab aufgeteilt; die Kante 160b des Initial-Graphens 100 in zwei Kanten 160ba, 160bb aufgeteilt; die Kante 160c des Initial-Graphens 100 in zwei Kanten 160ca, 160cb aufgeteilt.

In der Ausführungsform der FIG. 2 wurden die Eingangs- und Ausgangs-Kanten 160a, 160b, 160c an einer vorbestimmten Stelle entlang deren Länge geteilt. In der Ausführungsform der FIG. 2 ist diese vorbestimmte Stelle die Hälfte der jeweiligen Länge der Eingangs- und Ausgangs-Kanten 160a, 160b, 160c. Es wäre aber auch möglich, die Teilungs-Knoten 151e, 151f, 151g an anderen vorbestimmten Stellen entlang der Längen der jeweiligen Kanten anzuordnen.

Bezug nehmend auf FIG. 3 werden anschließend für den Kreuzungs-Knoten 150 hinzugefügte Kanten 161a, 161b, 161c, welche jeweils die Teilungs-Knoten 151e, 151f, 151g verbinden, hinzugefügt und derart der Ergebnis-Graph 101 erhalten. Die hinzugefügten Kanten 161a, 161b, 161c entsprechen den Abbiege-Beziehungen zwischen den ursprünglichen Eingangs- und Ausgangs-Kanten 160a, 160b, 160c.
Die oben stehend diskutierten Geschwindigkeitsprofile können in den Gewichten der hinzugefügten Kanten 161a, 161b, 161c berücksichtigt werden. Die Ge-wichte können richtungsabhängig sein.

Liegen z.B. Abbiege-Beschränkungen vor, etwa ein Verbot des Links-Abbiegens von der Eingangs-Kante 160b in die Ausgangs-Kante 160c, so können die entsprechend hinzugefügten Kanten entfernt oder initial nicht aufgenommen werden. Dies beträfe in dem vorliegenden Beispiel die hinzugefügte Kante 161b.

In Bezug auf die FIG. 1-3 wurden Techniken erläutert, welche durch geeignetes Hinzufügen von Teilungs-Knoten 151e, 151f, 151g und der hinzugefügten Kanten 161a, 161b, 161c, die die Teilungs-Knoten 151e, 151f, 151g verbinden, ermöglichen, den Ergebnis-Graphen 101 mit den wegunabhängigen Gewichten zu erhalten. Dieses Beispiel ist jedoch nicht limitierend und es sind verschiedenste Techniken möglich, um zu entsprechenden Ergebnissen mit den hinzugefügten Kanten 161a, 161b, 161c zu gelangen. In einer besonders einfachen Ausführungsform wäre es entsprechend möglich, das Transformieren des Initial-Graphens 100 in den Ergebnis-Graphen 101 durch Erzeugen des Ergebnis-Graphens 101 als geometrisch dualer Graph des Initial-Graphens 100 zu erzeugen.

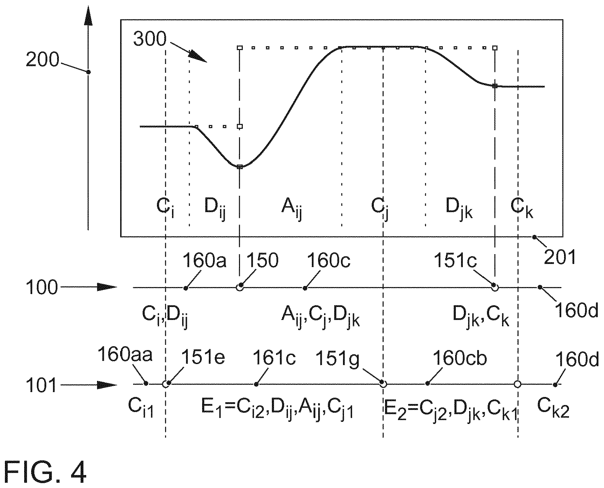

Nachfolgend werden in Bezug auf die FIG. 4 Details zu den Geschwindigkeitsprofilen 300 und Gewichten erläutert. In FIG. 4 ist die Geschwindigkeit 200 des Geschwindigkeitsprofils 300 über der Strecke 201 aufgetragen, etwa für die Straßensegmente 160a, 160b, 160c des Initial-Graphens 100 (cf. FIG. 1). Der Kreuzungs-Knoten 150 weist darüber hinaus eine geringe assoziierte Fahrtgeschwindigkeit auf. Es ist ersichtlich, dass das Geschwindigkeitsprofil 300 eine Ortsabhängigkeit der Geschwindigkeit 200 bezeichnet.

FIG. 4 zeigt den Übergang von der Kante 160a über 160c zu der Kante 160d (cf. FIG. 1). Der Weg kann in drei transiente Teile (von sich ändernder Geschwindigkeit), die in FIG. 4 mit Dij (Abbrems-Phase), Aij (Beschleunigungs-Phase) und Djk (Abbrems-Phase) bezeichnet sind und drei konstante Teile (bei denen die Zielgeschwindigkeit eingehalten wird), die in FIG. 4 mit Ci, Cj und Ck bezeichnet sind, unterteilt werden. Ejk bezeichnet den Energieverbrauch entlang des Pfads der Kanten 160a, 160c, 160d.

Insbesondere sind die Energiegewichte entlang der Kanten 160a, 160c, 160d wegabhängig, was bedeutet, dass die jeweiligen Energien in Abhängigkeit von den vorangehenden bzw. nachfolgenden Kanten variieren können. Diesbezüglich kann es erstrebenswert sein, die Transformation des Initial-Graphens 100 in den Ergebnis-Graphen 101 durchzuführen, da dieser wegunabhängige Gewichte aufweisen kann. Effiziente Routen-Berechnungsalgorithmen können dann auf dem Ergebnis-Graphen 101 zur Wegfindung angewendet werden, was bei den wegabhängigen des Initial-Graphen 100 nicht oder nur eingeschränkt möglich ist.

Nachfolgend wird gezeigt, wie die Gewichte, z.B. bezüglich des Energieverbrauchs und/oder der Zeit bestimmt werden können. Während in der durch FIG. 2 illustrierten Ausführungsform die Kante 160d nicht geteilt wird, bzw. unverändert in den Ergebnis-Graphen 101 übernommen wird, wird in der Ausführungsform, die in FIG. 4 illustriert wird, auch diese Kante 160d geteilt. Es wird angenommen, dass die Teilungs- Knoten 151e, 151g in dem Bereich mit konstanter Geschwindigkeit liegen, d.h. nicht in einer der transienten Phasen Dj, Aj, Djk.

Zum Berechnen der Gewichte für die verschiedenen Kanten des Ergebnis-Graphens 101 kann das Geschwindigkeitsprofil 300 auch im Fahrer-Modell und/oder dem Fahrzeug-Modell wie voran stehend beschrieben berechnet werden.

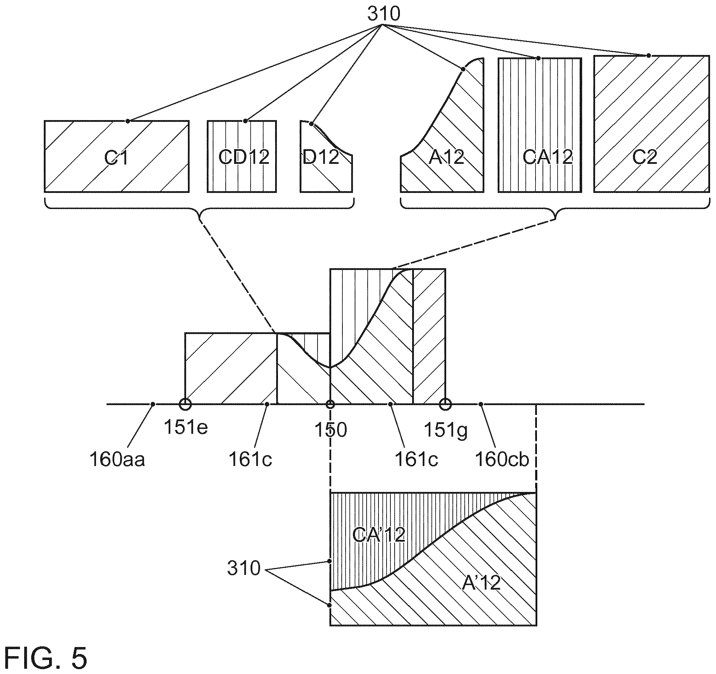

In einer einfachen Ausführungsform ist es z.B. möglich, Energien und/oder Zeiten für die Gewichte über die transienten Phasen und konstanten Phasen individuell zu summieren. Alternativ oder zusätzlich ist es auch möglich, die Gewichte individuell für die verschiedenen Kanten 161aa, 161c, 160cb, 160e des Ergebnis-Graphens 101 zu berechnen. Dies wird nachfolgend anhand der FIG. 5 erläutert.

In der FIG. 5 sind die Gewichte 310 (z.B. bezüglich des Energieverbrauchs oder bezüglich des Zeitverbrauchs) graphisch für die Kanten 160aa, 161c, 160cb des Ergebnis-Graphens 101 illustriert. In FIG. 5 ist darüber hinaus die ursprüngliche Position des Kreuzungs-Knotens 150 im Initial-Graphen 100 indiziert. Es sollte verstanden werden, dass der Kreuzungs-Knoten 150 nicht Bestandteil des Ergebnis-Graphens 101 sein muss. Jedoch kann es zur Illustration der Berechnung der Gewichte 310 vorteilhaft sein, die ursprüngliche Position des Kreuzungs-Knotens 150 graphisch zu indizieren.

Zunächst wird auf die Situation in FIG. 5 linksseitig des Kreuzungs-Knotens 150 Bezug genommen. In FIG. 5 sind die Werte der Gewichte 310 graphisch durch diagonal schraffierte Flächen (positives Vorzeichen) sowie vertikal schraffierte Flächen (negatives Vorzeichen) dargestellt. Das für die Konstantfahrt im Initial-Graphen 100 angenommene Gewicht 310 wird mit C1 bezeichnet. Um das tatsächliche Gewicht 310 zu berechnen, wird von dem Wert von C1 der Wert CD12 abgezogen, welcher dem Energie- und/oder Zeitverbrauch in der Abbrems-Phase der ursprünglich angenommenen Konstantfahrt entspricht. Es wird nun das Gewicht 310 D12 addiert, welches dem Energie- und/oder Zeitverbrauch entspricht, der für das Abbremsen hin zu Kreuzungs-Knoten 150 während der Abbrems-Phase benötigt wird. Das tatsächliche Gewicht 310 ergibt sich aus der Summe C1+D12-CD12. Dies ist in der Mitte der FIG. 5 durch die Überlagerung der Gewichte 310 mit den Bezeichnung C1, CD12, D12 dargestellt.

Auf der rechten Seite der FIG. 5, obenstehend und mittig, ist eine Situation dargestellt, welche eine Beschleunigungsphase beschreibt, die bis zum Knoten 151g abgeschlossen ist. Die Berechnung für diesen Fall ist analog zur Berechnung, wie sie voran stehend in Bezug auf die Situation in FIG. 5 linksseitig des Kreuzungs-Knotens 150 besprochen wurde. Kennzeichnend für diese in FIG. 5 obenstehend und in Bezug auf die Gewichte 310 mit der Bezeichnung C1, CD12, D12, A12, CA12, C2 dargestellten Situationen ist, dass die Beschleunigungs- und Abbremsphase jeweils innerhalb der Kante 161c abgeschlossen ist.

Die Flächen C2, CA'12 und A'12 repräsentieren eine Situation, bei der die Beschleunigungsphase in FIG. 5 rechtsseitig des Kreuzungs-Knotens 150 nicht innerhalb der Länge der Kante 161c abgeschlossen werden kann. Dies kann z.B. der Fall sein, wenn eine maximale Beschleunigung des Autos und / oder unter Berücksichtigung des Fahrermodells nicht ausreichend ist, um die Zielgeschwindigkeit bis zum Erreichen des Trennungs-Knotens 151g zu ermöglichen. Insbesondere kann dies der Fall sein, wenn die Position des Teilungs-Knotens fest vorgegeben ist.
Auch in einem solchen Fall kann dem Gewicht der Kante 161c der gesamte Zeit- und/oder Energieverbrauch, der während der Beschleunigungsphase entsteht, zugerechnet werden. Hierzu kann, wie aus FIG. 5 für die Gewichte C2, CA'12 und A'12 ersichtlich ist, die Berechnung über den angrenzenden Knoten, hier Teilungs-Knoten 151g, hinaus erstreckt werden. Unter dieser Maßgabe entspricht die Berechnung des gegenwärtig diskutierten Falles der Berechnung, wie sie voran stehend in Bezug auf die Situation in FIG. 5 linksseitig des Kreuzungs-Knotens 150 besprochen wurde.

Die Berechnung der Gewichte 310 ist in FIG. 5 rein beispielhaft dargestellt. Andere Techniken zum Berechnen der Gewichte 310 unter Berücksichtigung der Geschwindigkeitsprofile sind möglich.

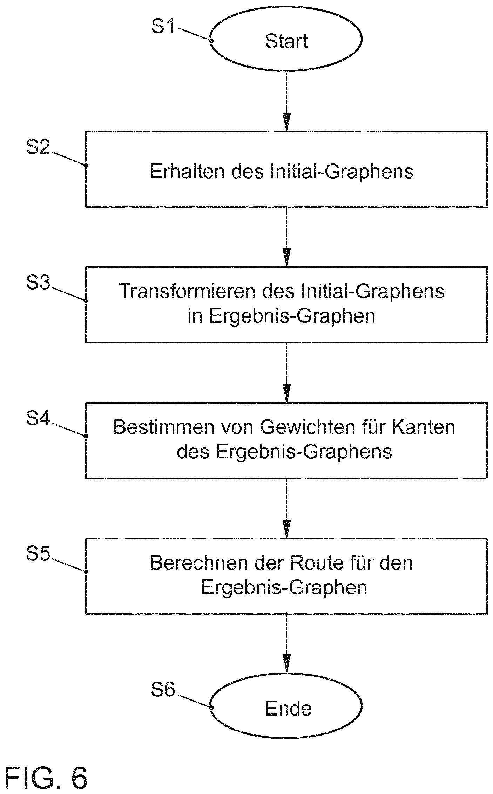

In FIG. 6 ist ein Verfahren zum Berechnen der Route unter Berücksichtigung der Geschwindigkeitsprofile 300 entlang der Route dargestellt. Das Verfahren beginnt in Schritt S1. In Schritt S2 wird der Initial-Graph 100, z.B. von einer Datenbank, erhalten.

In Schritt S3 erfolgt das Transformieren des Initial-Graphens 100 in den Ergebnis-Graphen 101. Schritt S3 kann z.B. das Hinzufügen der hinzugefügten Kanten mittels der Teilungs-Knoten 151e, 151f, 151g und/oder das Erstellen des geometrisch dualen Graphen zu dem Initial-Graph 100 umfassen. Entsprechende Techniken wurden voranstehend in Bezug auf die FIGs. 1-3 erläutert.

In Schritt S4 erfolgt das Bestimmen der Gewichte 310 für die Kanten des Ergebnis-Graphens 101. Hierbei können die Gewichte z.B. einen Energie- und/oder Zeitverbrauch für eine Fahrt entlang der entsprechenden Kanten des Ergebnis-Graphens 101 beschreiben. Die Gewichte können unter Berücksichtigung des Fahrermodells und / oder des Fahrzeugmodells bestimmt werden. Insbesondere kann das Geschwindigkeitsprofil unter Berücksichtigung des Fahrermodells und / oder des Fahrzeugmodells bestimmt werden und es ist dann möglich, die Gewichte direkt aus dem Geschwindigkeitsprofil zu erhalten. Entsprechende Techniken zum Bestimmen der Gewichtung wurden voranstehend in Bezug auf FIG. 5 erläutert.

In Schritt S5 erfolgt das Berechnen der Route für den Ergebnis-Graphen 101. Für Schritt S5 können z.B. herkömmlich bekannte Routen-Berechnungsalgorithmen, wie etwa der Dijkstra- oder Bellman-Ford-Algorithmus verwendet werden. Dies ist der Fall, da der Ergebnis-Graph 101 aufgrund der hinzugefügten Kanten wegunabhängige Gewichte aufweist.

In Schritt S6 endet das Verfahren.

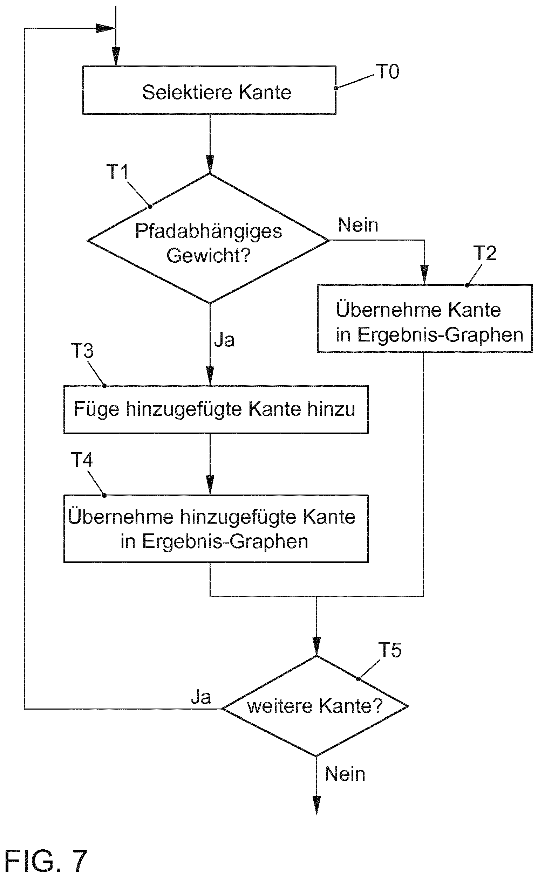

In FIG. 7 ist Schritt S3 der FIG. 6, nämlich das Transformieren des Initial-Graphens 100 in den Ergebnis-Graphen 101, detaillierter dargestellt.

Zunächst erfolgt in Schritt T0 das Selektieren einer Kante. In Schritt T1 wird überprüft, ob die selektierte Kante pfadabhängige Gewichte aufweist. Dies kann insbesondere der Fall sein, wenn ein Geschwindigkeitsprofil 200 unterschiedliche Geschwindigkeiten der Eingangs- und/oder Ausgangs-Kante des selektierten Kante aufweist und/oder die selektierte Kante einen Kreuzungs-Punkt z.B. mit mehreren Eingangs-Kanten und/oder mehreren Ausgangs-Kanten markiert. Weist die selektierte Kante keine pfadabhängigen Gewichte 310 auf, so erfolgt in Schritt T2 das Übernehmen der selektierten Kante in den Graphen 101, d.h. ohne weitere Änderungen. Andernfalls, d.h. wenn die selektierte Kante 310 pfadabhängige Gewichte aufweist, wird in Schritt T3 eine hinzugefügte Kante hinzugefügt und in Schritt T4 die hinzugefügte Kante in den Ergebnis-Graphen 101 übernommen. Zum Beispiel kann in Schritt T3 die in Schritt T0 selektierte Kante zuvor mittels der Teilungs-Knoten geteilt werden und die hinzugefügte Kante kann zwischen zwei Teilungs-Knoten aufeinanderfolgender Kanten verlaufen.

In Schritt T5 wird überprüft, ob eine weitere Kante im Initial-Graphen 100 vorhanden ist. Gegebenenfalls werden die Schritte T0-T4 neu durchgeführt. Anderenfalls fährt das Verfahren mit Schritt S4 in FIG. 6 fort.

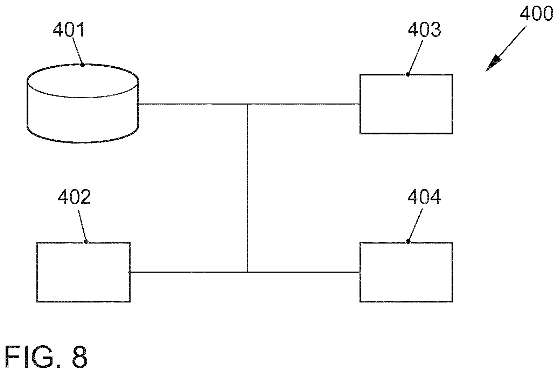

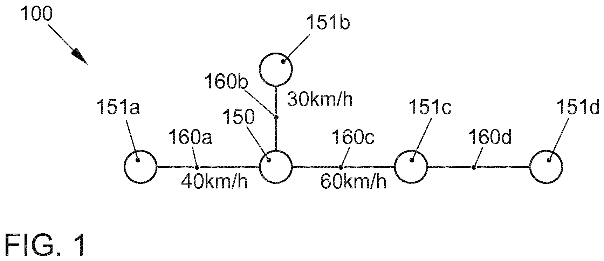

In FIG. 8 ist ein Navigationsgerät 400 entsprechend verschiedenen Ausführungsformen der Erfindung dargestellt. Das Navigationsgerät 400 umfasst eine Datenbank 401, welche den Initial-Graphen 100 speichern kann. Dazu kann die Datenbank ein Speichermedium umfassen, z.B. Flash-Speicher, eine Festplatte, eine CD-Rom oder ähnliches. Darüber hinaus umfasst das Na-vigationsgerät 400 eine Rechnereinheit 402, welche dazu eingerichtet ist, das Transformieren des Initial-Graphens 100 in den Ergebnis-Graphen 101, das Bestimmen der Gewichte und das Berechnen der Route durchzuführen.

Eine Benutzerstelle 403 erlaubt Interaktion mit einem Benutzer. Zum Beispiel kann der Benutzer verschiedene Randbedingungen der Routenberechnung, etwa ob Optimierung hinsichtlich Zeit und/oder Energie gewünscht ist oder die Gewichtung von Zeit und Energie in der Routing-Kostenfunktion, über die Benutzerschnittstelle 403 eingeben. Weiterhin umfasst das Navigati-onsgerät 400 einen Bildschirm 404, welcher z.B. dazu verwendet werden kann, eine Kartenan-sicht mit der berechneten Route auszugeben.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden im Rahmen des durch die Ansprüche definierten Schutzumfangs.

## Patentansprüche

1. Verfahren zum Berechnen einer Route unter Berücksichtigung von Geschwindigkeitsprofilen (300) entlang der Route, das Verfahren umfassend:
- Erhalten eines Initial-Graphens (100), der ein Straßennetz abbildet und aus Knoten (150, 151a-151d) und Kanten (160a-160d) besteht, wobei die Kanten (160a-160d) verschiedene Knoten (150, 151a-151d) verbinden,
wobei die Kanten (160a-160d) mit einer Fahrtgeschwindigkeit (200) assoziiert sind,
- Transformieren des Initial-Graphens (100) in einen Ergebnis-Graphen (101),
wobei der Ergebnis-Graph (101) für mindestens einen bestimmten Knoten (150) des Initial-Graphens (100) hinzugefügte Kanten (161a, 161b, 161c) beinhaltet,
wobei der bestimmte Knoten (150) mit mindestens drei Kanten (160a, 160b, 160c) verbunden ist und einem Kreuzungspunkt mit einer Verzweigung von Pfaden entspricht,
wobei jede Eingangs-Kante (160a; 160b) des mindestens einen Knotens (150) in zwei Kanten (160aa, 160ab; 160ba, 160bb) geteilt wird, welche durch jeweils einen Teilungs-Knoten (151e; 151f) verbunden sind,
wobei jede Ausgangs-Kante (160c) des mindestens einen bestimmten Knotens (150) in zwei Kanten (160ca, 160cb) geteilt wird, welche durch jeweils einen Teilungs-Knoten (151g) verbunden sind,
wobei die hinzugefügten Kanten (161a, 161b, 161c) alle Teilungs-Knoten (151e; 151f, 151g) jeder Eingangs-Kante (160a; 160b) und jeder Ausgangs-Kante (160c) miteinander verbinden,
wobei die Fahrtgeschwindigkeit (200) jeder Eingangs-Kante (160a; 160b) und die Fahrtgeschwindigkeit (200) jeder Ausgangs-Kante (160c) eine Geschwindigkeitsänderung indizieren,
- Bestimmen von Gewichten (310) für die Kanten (160aa, 160ba, 160cb, 160d, 161a, 161b, 161c) des Ergebnis-Graphens (101) aus den zugehörigen Fahrtgeschwindigkeiten (200),
wobei die Gewichte (310) für jede hinzugefügte Kante (161a, 161b, 161c) basierend auf einem Geschwindigkeitsprofil (300) bestimmt werden, welches die Fahrtgeschwindigkeit (200) der zugehörigen Eingangs-Kante (160a; 160b) und der zugehörigen Ausgangs-Kante (160c) und die zugehörige Geschwindigkeitsänderung berücksichtigt,
wobei durch das Hinzufügen der hinzugefügten Kanten (161a, 161b, 161c) wegabhängige Gewichte der mit dem bestimmten Knoten (150) verbundenen Kanten (160a, 160b, 160c) den hinzugefügten Kanten (161a, 161b, 161c) als wegunabhängige Gewichte zugewiesen werden,
- Entfernen des bestimmten Knotens (150) aus dem Ergebnis-Graphen (101),
- Berechnen der Route basierend auf dem Ergebnis-Graphen (101) und unter Berücksichtigung der bestimmten Gewichte (310) mittels eines Routen-Berechnungsalgorithmus.

2. Verfahren nach Anspruch 1,
**dadurch gekennzeichnet,**
**dass** das Teilen der Eingangs-Kante (160a) und der Ausgangs-Kante (160c) an einer vorbestimmten Stelle entlang deren Länge geschieht.

3. Verfahren nach einem der voranstehenden Ansprüche
**dadurch gekennzeichnet,**
**dass** die Geschwindigkeitsprofile (300) basierend auf einem Fahrermodell und / oder einem Fahrzeugmodell berechnet werden, welches Beschleunigung und Verzögerung des Fahrzeugs berücksichtigt.

4. Verfahren nach Anspruch 3,
**dadurch gekennzeichnet,**
**dass** die Geschwindigkeitsprofile (300) eine stetige Geschwindigkeitsänderung zwischen den mit den Kanten (160aa, 160ba, 160cb, 160d, 161a, 161b, 161c) des Ergebnis-Graphens (101) assoziierten Fahrtgeschwindigkeiten (200) unter Berücksichtigung des Fahrermodells und / oder des Fahrzeugmodells beschreiben.

5. Verfahren nach einem der voranstehenden Ansprüche,
**dadurch gekennzeichnet,**
**dass** die Geschwindigkeitsprofile (300) aus einer Beschleunigungs-Phase mit zunehmender Fahrtgeschwindigkeit (200) und / oder einer Abbrems-Phase mit abnehmender Fahrtgeschwindigkeit (200) bestehen, sowie aus einer Konstant-Phase mit gleichbleibender Fahrtgeschwindigkeit (200) bestehen.

6. Verfahren nach Anspruch 2 und 5,
**dadurch gekennzeichnet,**
**dass** die vorbestimmten Stellen, an der die Eingangs-Kante (160a; 160b) und die Ausgangs-Kante (160c) entlang deren Länge geteilt werden, in der Konstant-Phase liegen.

7. Verfahren nach einem der voranstehenden Ansprüche,
**dadurch gekennzeichnet,**
**dass** die Geschwindigkeitsprofile (300) Fahrtgeschwindigkeiten (200) beschreiben, die immer kleiner oder gleich der entsprechenden Fahrtgeschwindigkeit (200) der Kanten (160aa, 160ba, 160cb, 160d, 161a, 161b, 161c) des Ergebnis-Graphens (101) sind.

8. Verfahren nach einem der voranstehenden Ansprüche,
**dadurch gekennzeichnet,**
**dass** das Transformieren beinhaltet:
- Übernehmen aller Knoten (151a-151d) und Kanten (160d) des Initial-Graphens (100) in den Ergebnis-Graphen (101), die zu keinem Kreuzungspunkt mit einer Verzweigung von Pfaden gehören.

9. Navigationsgerät (400), welches zum Berechnen einer Route unter Berücksichtigung von Geschwindigkeitsprofilen (300) entlang der Route eingerichtet ist, umfassend:
- eine Rechnereinheit (402), welche eingerichtet ist, die folgenden Schritte durchzuführen:
- Erhalten eines Initial-Graphens (100), der ein Straßennetz abbildet und aus Knoten (150, 151a-151d) und Kanten (160a-160d) besteht, wobei die Kanten (160a-160d) verschiedene Knoten (150, 151a-151d) verbinden,
wobei die Kanten (160a-160d) mit einer Fahrtgeschwindigkeit (200) assoziiert sind,
- Transformieren des Initial-Graphens (100) in einen Ergebnis-Graphen (101), wobei der Ergebnis-Graph (101) für mindestens einen bestimmten Knoten (150) des Initial-Graphens (100) hinzugefügte Kanten (161a, 161b, 161c) beinhaltet, wobei der bestimmte Knoten (150) mit mindestens drei Kanten (160a, 160b, 160c) verbunden ist und einem Kreuzungspunkt mit einer Verzweigung von Pfaden entspricht,
wobei jede Eingangs-Kante (160a; 160b) des mindestens einen Knotens (150) in zwei Kanten (160aa, 160ab; 160ba, 160bb) geteilt wird, welche durch jeweils einen Teilungs-Knoten (151e; 151f) verbunden sind,
wobei jede Ausgangs-Kante (160c) des mindestens einen bestimmten Knotens (150) in zwei Kanten (160ca, 160cb) geteilt wird, welche durch jeweils einen Teilungs-Knoten (151g) verbunden sind,
wobei die hinzugefügten Kanten (161a, 161b, 161c) alle Teilungs-Knoten (151e; 151f, 151g) jeder Eingangs-Kante (160a; 160b) und jeder Ausgangs-Kante (160c) miteinander verbinden,
wobei die Fahrtgeschwindigkeit (200) jeder Eingangs-Kante (160a; 160b) und die Fahrtgeschwindigkeit (200) jeder Ausgangs-Kante (160c) eine Geschwindigkeitsänderung indizieren,
- Bestimmen von Gewichten (310) für die Kanten (160aa, 160ba, 160cb, 160d, 161a, 161b, 161c) des Ergebnis-Graphens (101) aus den zugehörigen Fahrtgeschwindigkeiten (200),
wobei die Gewichte (310) für jede hinzugefügte Kante (161a, 161b, 161c) basierend auf einem Geschwindigkeitsprofil (300) bestimmt werden, welches die Fahrtgeschwindigkeit (200) der zugehörigen Eingangs-Kante (160a; 160b) und der zugehörigen Ausgangs-Kante (160c) und die zugehörige Geschwindigkeitsänderung berücksichtigt,
wobei durch das Hinzufügen der hinzugefügten Kanten (161a, 161b, 161c) wegabhängige Gewichte der mit dem bestimmten Knoten (150) verbundenen Kanten (160a, 160b, 160c) den hinzugefügten Kanten (161a, 161b, 161c) als wegunabhängige Gewichte zugewiesen werden,
- Entfernen des bestimmten Knotens (150) aus dem Ergebnis-Graphen (101),
- Berechnen der Route basierend auf dem Ergebnis-Graphen (101) und unter Berücksichtigung der bestimmten Gewichte (310) mittels eines Routen-Berechnungsalgorithmus.

10. Navigationsgerät (400) nach Anspruch 9, welches eingerichtet ist, ein Verfahren nach einem der Ansprüche 2 - 8 durchzuführen.

## Claims

1. Method for calculating a route taking into consideration speed profiles (300) along the route, the method comprising:
- obtaining an initial graph (100) that maps a road network and consists of nodes (150, 151a-151d) and edges (160a-160d), wherein the edges (160a-160d) connect different nodes (150, 151a-151d),
the edges (160a-160d) being associated with a speed of travel (200),
- transforming the initial graph (100) into a result graph (101),
wherein the result graph (101) contains edges (161a, 161b, 161c) added for at least one particular node (150) of the initial graph (100), the particular node (150) being connected to at least three edges (160a, 160b, 160c) and corresponding to an intersection having a branching of paths,
wherein each input edge (160a; 160b) of the at least one node (150) is divided into two edges (160aa, 160ab; 160ba, 160bb) connected by a respective division node (151e; 151f),
wherein each output edge (160c) of the at least one particular node (150) is divided into two edges (160ca, 160cb) connected by a respective division node (151g),
wherein the added edges (161a, 161b, 161c) connect all division nodes (151e; 151f, 151g) of each input edge (160a; 160b) and each output edge (160c) to one another,
wherein the speed of travel (200) of each input edge (160a; 160b) and the speed of travel (200) of each output edge (160c) indicate a change of speed,
- determining weights (310) for the edges (160aa, 160ba, 160cb, 160d, 161a, 161b, 161c) of the result graph (101) from the associated speeds of travel (200),
wherein the weights (310) for each added edge (161a, 161b, 161c) are determined based on a speed profile (300) that takes into consideration the speed of travel (200) of the associated input edge (160a; 160b) and of the associated output edge (160c) and the associated change of speed,
wherein the adding of the added edges (161a, 161b, 161c) assigns distance-dependent weights of the edges (160a, 160b, 160c) connected to the particular node (150) to the added edges (161a, 161b, 161c) as distance-independent weights,
- removing the particular node (150) from the result graph (101),
- calculating the route based on the result graph (101) and taking into consideration the determined weights (310) by means of a route calculation algorithm.

2. Method according to Claim 1,
**characterized**
**in that** the dividing of the input edge (160a) and the output edge (160c) occurs at a predetermined point along the length thereof.

3. Method according to either of the preceding claims,
**characterized**
**in that** the speed profiles (300) are calculated based on a driver model and/or a vehicle model that takes into consideration acceleration and deceleration of the vehicle.

4. Method according to Claim 3,
**characterized**
**in that** the speed profiles (300) describe a continuous change of speed between the speeds of travel (200) associated with the edges (160aa, 160ba, 160cb, 160d, 161a, 161b, 161c) of the result graph (101) by taking into consideration the driver model and/or the vehicle model.

5. Method according to one of the preceding claims,
**characterized**
**in that** the speed profiles (300) consist of an acceleration phase with increasing speed of travel (200) and/or a slowing phase with decreasing speed of travel (200), and consist of a constant phase with constant speed of travel (200).

6. Method according to Claims 2 and 5,
**characterized**
**in that** the predetermined points at which the input edge (160a; 160b) and the output edge (160c) are divided along a length thereof are in the constant phase.

7. Method according to one of the preceding claims,
**characterized**
**in that** the speed profiles (300) describe speeds of travel (200) that are always less than or equal to the applicable speed of travel (200) of the edges (160aa, 160ba, 160cb, 160d, 161a, 161b, 161c) of the result graph (101).

8. Method according to one of the preceding claims,
**characterized**
**in that** the transforming involves:
- transferring all nodes (151a-151d) and edges (160d) of the initial graph (100) that do not belong to an intersection having a branching of paths to the result graph (101).

9. Navigation appliance (400) configured to calculate a route by taking into consideration speed profiles (300) along the route, comprising:
- a computer unit (402) configured to perform the following steps:
- obtaining an initial graph (100) that maps a road network and consists of nodes (150, 151a-151d) and edges (160a-160d), wherein the edges (160a-160d) connect different nodes (150, 151a-151d),
the edges (160a-160d) being associated with a speed of travel (200),
- transforming the initial graph (100) into a result graph (101),
wherein the result graph (101) contains edges (161a, 161b, 161c) added for at least one particular node (150) of the initial graph (100), the particular node (150) being connected to at least three edges (160a, 160b, 160c) and corresponding to an intersection having a branching of paths,
wherein each input edge (160a; 160b) of the at least one node (150) is divided into two edges (160aa, 160ab; 160ba, 160bb) connected by a respective division node (151e; 151f),
wherein each output edge (160c) of the at least one particular node (150) is divided into two edges (160ca, 160cb) connected by a respective division node (151g),
wherein the added edges (161a, 161b, 161c) connect all division nodes (151e; 151f, 151g) of each input edge (160a; 160b) and each output edge (160c) to one another,
wherein the speed of travel (200) of each input edge (160a; 160b) and the speed of travel (200) of each output edge (160c) indicate a change of speed,
- determining weights (310) for the edges (160aa, 160ba, 160cb, 160d, 161a, 161b, 161c) of the result graph (101) from the associated speeds of travel (200),
wherein the weights (310) for each added edge (161a, 161b, 161c) are determined based on a speed profile (300) that takes into consideration the speed of travel (200) of the associated input edge (160a; 160b) and of the associated output edge (160c) and the associated change of speed,
wherein the adding of the added edges (161a, 161b, 161c) assigns distance-dependent weights of the edges (160a, 160b, 160c) connected to the particular node (150) to the added edges (161a, 161b, 161c) as distance-independent weights,
- removing the particular node (150) from the result graph (101),
- calculating the route based on the result graph (101) and taking into consideration the determined weights (310) by means of a route calculation algorithm.

10. Navigation appliance (400) according to Claim 9, configured to perform a method according to one of Claims 2-8.

## Revendications

1. Procédé de calcul d'un itinéraire en tenant compte de profils de vitesse (300) le long de l'itinéraire, le procédé comportant les étapes consistant à :
- obtenir un graphe initial (100) représentant un réseau routier constitué de noeuds (150, 151a-151d) et de bords (160a-160d), dans lequel les bords (160a-160d) relient différents noeuds (150, 151a-151d),
dans lequel les bords (160a-160d) sont associés à une vitesse de déplacement (200),
- transformer le graphe initial (100) en un graphe de résultat (101),
dans lequel le graphe de résultat (101) comprend des bords (161a, 161b, 161c) ajoutés pour au moins un noeud déterminé (150) du graphe initial (100),
dans lequel le noeud déterminé (150) est relié à au moins trois bords (160a, 160b, 160c) et correspond à un point d'intersection avec une ramification de trajets,
dans lequel chaque bord d'entrée (160a ; 160b) dudit au moins un noeud (150) est divisé en deux bords (160aa, 160ab ; 160ba, 160bb) reliés chacun par un noeud de division respectif (151e ; 151f),
dans lequel chaque bord de sortie (160c) dudit au moins un noeud déterminé (150) est divisé en deux bords (160ca, 160cb) reliés chacun par un noeud de division (151g), dans lequel les bords ajoutés (161a, 161b, 161c) relient tous les noeuds de division (151e ; 151f, 151g) de chaque bord d'entrée (160a ; 160b) et de chaque bord de sortie (160c),
dans lequel la vitesse de déplacement (200) de chaque bord d'entrée (160a ; 160b) et la vitesse de déplacement (200) de chaque bord de sortie (160c) indiquent un changement de vitesse,
- déterminer des poids (310) pour les bords (160aa, 160ba, 160cb, 160d, 161a, 161b, 161c) du graphe de résultat (101) à partir des vitesses de déplacement (200) associées,
dans lequel les poids (310) pour chaque bord ajouté (161a, 161b, 161c) sont déterminés sur la base d'un profil de vitesse (300) qui prend en compte la vitesse de déplacement (200) du bord d'entrée associé (160a ; 160b) et du bord de sortie associé (160c) et le changement de vitesse associé,
dans lequel des poids, qui dépendent du trajet, des bords (160a, 160b, 160c) reliés au noeud particulier (150) sont affectés aux bords ajoutés (161a, 161b, 161c) par ajout des bords (161a, 161b, 161c), en tant que poids indépendants du trajet,
- éliminer le noeud déterminé (150) du graphe de résultat (101),
- calculer l'itinéraire sur la base du graphe de résultat (101) et prendre en compte les poids déterminés (310) au moyen d'un algorithme de calcul d'itinéraire.

2. Procédé selon la revendication 1,
**caractérisé en ce que** la division du bord d'entrée (160a) et du bord de sortie (160c) se produit à un emplacement prédéterminé le long de leur longueur.

3. Procédé selon l'une des revendications précédentes,
**caractérisé en ce que** les profils de vitesse (300) sont calculés sur la base d'un modèle de conducteur et/ou d'un modèle de véhicule qui prend en compte l'accélération et la décélération du véhicule.

4. Procédé selon la revendication 3,
**caractérisé en ce que** les profils de vitesse (300) décrivent un changement continu de vitesse entre les vitesses de déplacement (200) associées aux bords (160aa, 160ba, 160cb, 160d, 161a, 161b, 161c) du graphe de résultat (101) par prise en compte du modèle de conducteur et/ou du modèle de véhicule.

5. Procédé selon l'une des revendications précédentes,
**caractérisé en ce que** les profils de vitesse (300) sont constitués d'une phase d'accélération présentant une vitesse de déplacement croissante (200) et/ou d'une phase de décélération présentant une vitesse de déplacement décroissante (200), ainsi que d'une phase constante présentant une vitesse de déplacement constante (200).

6. Procédé selon les revendications 2 et 5,
**caractérisé en ce que** les emplacements prédéterminés où le bord d'entrée (160a ; 160b) et le bord de sortie (160c) sont divisés le long de leur longueur se situent dans la phase constante.

7. Procédé selon l'une des revendications précédentes,
**caractérisé en ce que** les profils de vitesse (300) décrivent des vitesses de déplacement (200) qui sont toujours inférieures ou égales à la vitesse de déplacement correspondante (200) des bords (160aa, 160ba, 160cb, 160d, 161a, 161b, 161c) du graphe de résultat (101) .

8. Procédé selon l'une des revendications précédentes,
**caractérisé en ce que** la transformation consiste à :
- inclure tous les noeuds (151a-151d) et tous les bords (160d) du graphe initial (100) dans les graphes de résultat (101) qui n'appartiennent pas à un point d'intersection avec une ramification de trajets.

9. Dispositif de navigation (400) conçu pour calculer un itinéraire par prise en compte de profils de vitesse (300) le long de l'itinéraire, comprenant :
- une unité de calcul (402) conçue pour exécuter les étapes suivantes consistant à :
- obtenir un graphe initial (100) représentant un réseau routier constitué de noeuds (150, 151a-151d) et de bords (160a-160d), dans lequel les bords (160a-160d) relient différents noeuds (150, 151a-151d),
dans lequel les bords (160a-160d) sont associés à une vitesse de déplacement (200),
- transformer le graphe initial (100) en un graphe de résultat (101), dans lequel le graphe de résultat (101) comprend des bords (161a, 161b, 161c) ajoutés pour au moins un noeud déterminé (150) du graphe initial (100), dans lequel le noeud déterminé (150) est relié à au moins trois bords (160a, 160b, 160c) et correspond à un point d'intersection avec une ramification de trajets,
dans lequel chaque bord d'entrée (160a ; 160b) dudit au moins un noeud (150) est divisé en deux bords (160aa, 160ab ; 160ba, 160bb) reliés chacun par un noeud de division respectif (151e ; 151f),
dans lequel chaque bord de sortie (160c) dudit au moins un noeud déterminé (150) est divisé en deux bords (160ca, 160cb) reliés chacun par un noeud de division (151g), dans lequel les bords ajoutés (161a, 161b, 161c) relient tous les noeuds de division (151e ; 151f, 151g) de chaque bord d'entrée (160a ; 160b) et de chaque bord de sortie (160c),
dans lequel la vitesse de déplacement (200) de chaque bord d'entrée (160a ; 160b) et la vitesse de déplacement (200) de chaque bord de sortie (160c) indiquent un changement de vitesse,
- déterminer des poids (310) pour les bords (160aa, 160ba, 160cb, 160d, 161a, 161b, 161c) du graphe de résultat (101) à partir des vitesses de déplacement (200) associées,
dans lequel les poids (310) pour chaque bord ajouté (161a, 161b, 161c) sont déterminés sur la base d'un profil de vitesse (300) qui prend en compte la vitesse de déplacement (200) du bord d'entrée associé (160a ; 160b) et du bord de sortie associé (160c) et le changement de vitesse associé,
dans lequel des poids, qui dépendent du trajet, des bords (160a, 160b, 160c) reliés au noeud déterminé (150) sont affectés aux bords ajoutés (161a, 161b, 161c) par ajout des bords (161a, 161b, 161c) en tant que poids indépendants du trajet,
- éliminer le noeud déterminé (150) du graphe de résultat (101),
- calculer l'itinéraire sur la base du graphe de résultat (101) et prendre en compte les poids déterminés (310) au moyen d'un algorithme de calcul d'itinéraire.

10. Dispositif de navigation (400) selon la revendication 9, qui est conçu pour mettre en oeuvre un procédé selon l'une des revendications 2 - 8.
